**Europäisches Patentamt**

**European Patent Office**

**Office européen des brevets**

(19)

(11) Numéro de publication : **0 211 059 B1**

(12)

# FASCICULE DE BREVET EUROPEEN

(45) Date de publication du fascicule du brevet :
**09.10.91 Bulletin 91/41**

(51) Int. Cl.⁵ : **H01R 9/00, G09F 13/28, H02G 3/28**

(21) Numéro de dépôt : **86901085.0**

(22) Date de dépôt : **05.02.86**

(86) Numéro de dépôt international :
**PCT/FR86/00031**

(87) Numéro de publication internationale :
**WO 86/04742 14.08.86 Gazette 86/18**

(54) **REVETEMENT DE PAROI PERMETTANT L'ALIMENTATION D'UN RECEPTEUR ELECTRIQUE A POSITIONS VARIABLES SUR LA PAROI.**

(30) Priorité : **08.02.85 FR 8501766**

(43) Date de publication de la demande :
**25.02.87 Bulletin 87/09**

(45) Mention de la délivrance du brevet :
**09.10.91 Bulletin 91/41**

(84) Etats contractants désignés :
**AT BE CH DE GB IT LI LU NL SE**

(56) Documents cités :
**EP-A- 0 116 505
DE-A- 1 936 991
FR-A- 0 838 304
FR-A- 2 156 807
US-A- 3 610 933
US-A- 4 402 151**

(73) Titulaire : **SCIDEPA
Salmaise
F-21690 Verrey-sous-Salmaise (FR)**

(72) Inventeur : **SHILLITO, Richard, Paul
31, allée des Eaux Farouches
F-91190 Gif sur Yvette (FR)**
Inventeur : **BEHAR, Maurice
48, rue de Montreuil
F-75011 Paris (FR)**
Inventeur : **MUTTE, Jean-Louis
La Reverderie 5, rue de la Chataigneraie
F-95160 Montmorency (FR)**

(74) Mandataire : **Bruder, Michel
10 rue de la Pépinière
F-75008 Paris (FR)**

Jouve, 18, rue Saint-Denis, 75001 PARIS

## Description

Revêtement de paroi permettant l'alimentation d'un récepteur électrique à positions variables sur la paroi.

La présente invention a trait à un revêtement de paroi, tel que notamment un revêtement de sol, mais pouvant également être un revêtement de mur ou de cloison, permettant l'alimentation en énergie électrique d'un récepteur électrique pouvant occuper une position variable sur la paroi.

Les brevets français FR-A- 2540 683 et européen EP-A- 0116 505 déposée le 3 février 1984 et la demande U.S.A. n° 591 495 déposée le 20 mars 1984 et dont les inventeurs sont Messieurs Johannes ANDRIESSEN et Daniel GAILLARD, sont incorporées dans la présente description à titre de référence. Ces demandes de brevet décrivent un dispositif d'alimentation d'un récepteur électrique à positions variables sur une surface, caractérisé en ce qu'il comprend, sur ladite surface, un réseau de bandes conductrices de même largeur et espacées les unes des autres, ces bandes étant imbriquées alternativement les unes dans les autres en formant deux ensembles, à savoir un premier ensemble de bandes de rangs pairs connecté à un pôle d'une source de courant électrique, et un second ensemble de bandes de rangs impairs connecté à l'autre pôle de la source, un capteur de courant à positions variables portant au moins deux palpeurs susceptibles de venir en contact avec les bandes conductrices et un circuit de commutation pour l'alimentation du récepteur, ce circuit ayant plusieurs entrées connectées respectivement aux palpeurs de courant et une sortie reliée au récepteur pour permettre l'alimentation du récepteur lorsqu'au moins deux des palpeurs de courant viennent en contact avec deux bandes conductrices appartenant respectivement au premier et second ensembles de bandes reliés aux deux pôles de la source de courant électrique, le réseau de bandes parallèles conductrices étant recouvert d'une couche de matière isolante et les palpeurs de courant étant réalisés sous la forme d'aiguilles-contacts métalliques de même longueur traversant la couche en matière isolante formant le revêtement supérieur appliqué sur les bandes conductrices.

Les aiguilles conductrices qui sont généralement au nombre de deux ou de trois, et qui sont, dans ce dernier cas de préférence disposées au sommet d'un triangle équilatéral, peuvent, grâce à une disposition spatiale convenable, par exemple dans le cas où la hauteur du triangle équilatéral est égale à l'entraxe des bandes conductrices, assurer une liaison électrique avec deux bandes adjacentes conductrices de polarités différentes et ainsi alimenter en courant le récepteur, ceci pratiquement pour n'importe quelle position du capteur de courant.

D'après cette invention, le réseau de bandes peut être posé sur un sol ou plancher et la couche de matière isolante, qui forme le revêtement supérieur appliqué sur les bandes conductrices, peut être un revêtement tel qu'une moquette. En variante, les bandes peuvent être fixées ou collées contre une paroi verticale et le revêtement isolant être un tissu d'ameublement revêtant la paroi.

Cette invention présente de grands avantages dans la mesure où elle permet de se dispenser de raccorder en un point fixe, tel qu'une prise de courant, un récepteur qui peut être un appareil domestique ou une lampe mais également une machine à écrire, un ordinateur ou une autre machine de bureau.

Elle présente, cependant, l'inconvénient de nécessiter la pose ou fixation du réseau de bandes conductrices ce qui constitue une opération qui doit précéder la pose du revêtement de paroi jouant le rôle de couche isolante, et qui doit être effectuée par un personnel spécialisé dans les installations électriques.

On connait également par le brevet FR-A-2 156 807 un système de distribution d'énergie électrique constitué de panneaux disposés de façon adjacente les uns par rapport aux autres, l'énergie électrique étant transmise, de proche en proche, d'un panneau au panneau suivant. Ce type d'alimentation électrique présente l'inconvénient de posseder, à chaque transmission, c'est-à-dire pour chaque panneau, une chute de tension, se traduisant, en fin de ligne, par une perte notable de tension et donc de la puissance transmise.

La présente invention se propose de remédier à ces inconvénients et de fournir un revêtement de paroi permettant l'alimentation d'un récepteur électrique à positions variables sur la paroi qui dispense de cette phase d'installation et évite, dans une grande mesure, l'utilisation d'un personnel compétent dans le domaine du raccordement électrique. Elle se propose également de fournir un revêtement standardisé susceptible de nombreuses applications.

L'invention a pour objet un revêtement de paroi selon la revendication 7.

Les éléments de revêtement, se présentent sous forme de dalles, par exemple carrées ou rectangulaires, susceptibles d'être posées ou appliquées sur la paroi les unes à côté des autres à la façon d'un dallage.

Les dimensions du côté des dalles sont, par exemple, de 25 cm à 2 m.

Les revêtements de paroi selon l'invention peuvent se présenter, avantageusement, sous forme de moquette ou revêtement de sol similaire. En variante, ils peuvent être également conçus sous forme de revêtement de paroi verticale.

La couche supérieure d'usure en matériau textile, qui peut, par exemple, consister en une couche tuftée, aiguilletée ou tissée, peut être conçue pour jouer également le rôle de la couche de matière isolante.

Cependant, on préfère, conformément à l'invention, utiliser comme couche isolante, une couche sous-jacente sur laquelle la couche d'usure est fixée ou collée.

Dans le cas de dalles de grandes dimensions, la couche de matière isolante peut être une couche de mousse ou de thibaude s'étendant sous la couche d'usure textile.

De façon intéressante, pour lesquels on préfère obtenir un certain aplomb et une certaine rigidité, la couche de matière isolante peut avantageusement être constituée d'une couche d'assise, par exemple bituminée ou en un matériau tel que le PVC.

Les bandes conductrices peuvent être réalisées en un matériau conducteur convenable, par exemple en aluminium, et elles sont avantageusement disposées les unes à côté des autres de façon que l'intervalle entre deux bandes adjacentes soit petit, comparé à la largeur de la bande, tout en étant supérieur au diamètre d'une aiguille de contact de façon à éviter un risque de court-circuit. A titre d'exemple, les bandes peuvent avoir une largeur de l'ordre de 10 à 20 cm.

Les bandes conductrices, qui peuvent éventuellement être revêtues sur l'une ou leurs deux faces d'un fin papier isolant, sont appliquées, de préférence directement, sous la couche isolante, par exemple, par collage. Elles peuvent, cependant, également être enrobées dans la couche de matière isolante, notamment lorsqu'il s'agit d'une couche bitumineuse ou en matière plastique.

De préférence, l'élément de revêtement présente, à sa face inférieure, une feuille ou film destiné à être appliqué contre la paroi, tel que par exemple une feuille en fibres synthétiques non tissée, cette feuille jouant alors avantageusement le rôle d'un isolant entre les bandes conductrices et la paroi elle-même.

Les bandes des deux ensembles d'un élément peuvent s'étendre alternativement et parallèlement les unes aux autres sur toute une longueur d'élément. Une telle disposition est préférée, notamment dans le cas de dalles de grandes dimensions.

Elles peuvent, cependant, également présenter des formes imbriquées, par exemple en volutes, et une telle disposition peut être particulièrement avantageuse, par exemple dans le cas de dalles carrées ou rectangulaires, en permettant notamment, dans ces cas, d'assurer des raccordements aux quatre coins des dalles. D'autres formes imbriquées peuvent, bien entendu, être mises en oeuvre.

Les moyens pour assurer la continuité électrique entre deux éléments adjacents peuvent être des moyens extérieurs à l'élément, auquel cas les bandes s'étendent, de préférence, de façon rectiligne et parallèle entre elles.

Cependant, dans une forme de réalisation très avantageuse, les moyens de liaison peuvent également faire partie de l'élément, une telle forme de réalisation étant particulièrement intéressante dans le cas de dalles notamment carrées ou rectangulaires. Ainsi, on peut avantageusement laisser dépasser les bandes sur une certaine distance au-delà de la périphérie de la dalle afin d'obtenir une surperposition des extrémités dépassantes des bandes de deux dalles adjacentes, l'une des extrémités étant, par exemple, repliée sous la dalle qui la porte et s'appliquant sur l'extrémité déployée de la bande de la dalle adjacente.

Dans une autre forme de réalisation, la liaison électrique peut s'effectuer, par exemple pour une rangée de dalles, par deux bandes indépendantes disposées sous la rangée, parallèlement l'une à l'autre et contre lesquelles viennent s'appliquer les faces inférieures, qui sont alors découvertes, des ensembles respectifs de bandes des dalles de la rangée.

Selon un perfectionnement de l'invention, certaines des bandes conductrices peuvent avoir une fonction spécialisée, par exemple la fonction de lignes téléphoniques ou informatiques ou de lignes de signal d'alarme ou de signal provenant d'un capteur. En variante, en dehors des bandes d'alimentation en énergie électrique des récepteurs, les éléments selon l'invention peuvent comporter d'autres conducteurs qui peuvent éventuellement ne pas être sous forme de bande telle que des conducteurs coaxiaux ou autres.

On peut inclure dans la dalle, soit directement dans l'épaisseur, soit en formant un relief sur la dalle, des appareils électriques tels que prises, capteurs d'alarme ou de température ou autres, voyants lumineux, dispositifs d'illumination, etc...

D'autres avantages et caractéristiques de l'invention apparaîtront à la lecture de la description suivante faite à titre d'exemple non limitatif et se référant au dessin annexé dans lequel :

la figure 1 représente une vue de dessus avec arrachement partiel d'une dalle de moquette,

la figure 2 représente une vue en coupe transversale, avec exagération de l'épaisseur, de cette moquette,

la figure 3 représente une vue de dessous d'une dalle selon une autre forme de réalisation de l'invention,

la figure 4 représente une vue en coupe transversale, avec exagération de l'épaisseur, de la dalle de la figure 3,

la figure 5 représente une vue de dessus de plusieurs dalles selon la figure 3, raccordées électriquement,

la figure 6 représente une vue de dessous d'un ensemble de plusieurs dalles selon une autre variante de l'invention.

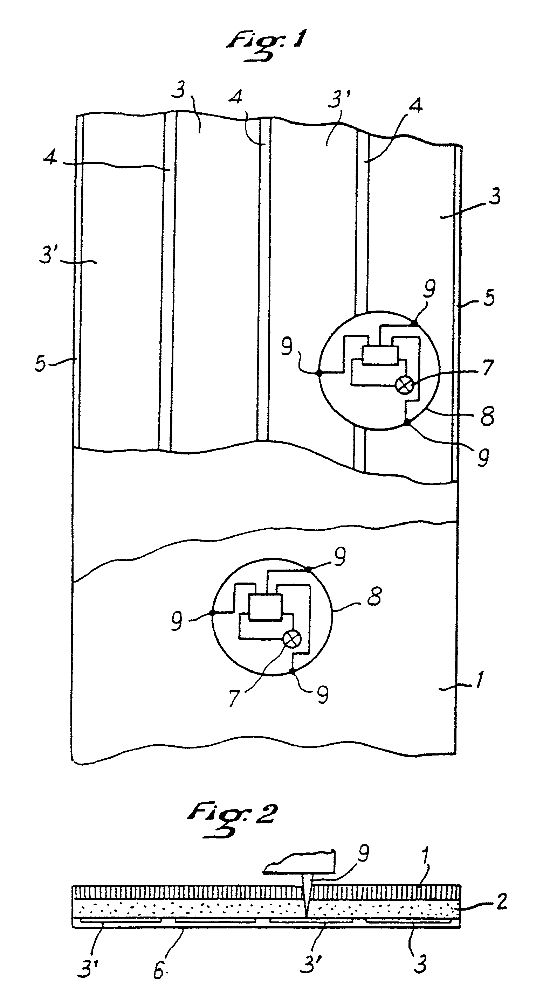

On se réfère tout d'abord aux figures 1 et 2.

l'élément se présente sous forme d'une dalle de moquette comprenant une couche d'usure textile, par exemple tuftée 1 adhérisée sur une couche sous-jacente de mousse 2 électriquement isolante telle qu'une mousse de PVC. L'épaisseur de la couche d'usure textile 1 est, par exemple, de 8 mm et l'épaisseur de la couche de mousse 2, de 5 mm.

Sous la face inférieure de la couche de mousse 2, sont collées quatre bandes métalliques parallèles 3, 3' séparées les unes des autres par des intervalles 4, les deux bandes extrêmes étant également décalées d'un des bords respectif de la dalle par un intervalle 5 ayant la moitié de la largeur de l'intervalle 4, de sorte que, lorsque plusieurs dalles sont juxtaposées, ils déterminent un ensemble de bandes parallèles séparées par des intervalles égaux.

Les bandes ont, par exemple pour une dalle de 90 cm de côté, une largeur de 6 cm, de sorte que chaque intervalle 4 possède une largeur de 6 cm. L'épaisseur des bandes et avantageusement de 5/10 mm.

Les bandes 3, 3' peuvent être avantageusement revêtues, sous leur face inférieure, d'une couche ou feuille de matériau isolant 6, telle que, par exemple une feuille non tissée de polyester-polypropylène ayant une épaisseur, par exemple, de l'ordre de 1 mm.

Les bandes 3, 3' sont disposées de façon alternée, toutes les bandes 3 étant destinées à être reliées à un pôle d'une source de courant et les bandes 3', à l'autre pôle de cette source. Si l'on recouvre un sol d'une pièce à l'aide d'une série de dalles juxtaposées conformes à la figure 1, on peut prévoir des moyens pour relier électriquement les bandes 3 de l'ensemble des lés et les bandes 3' de l'ensemble des lés à leurs polarités respectives. Ceci peut être effectué par tout moyen convenable, par exemple en faisant s'étendre sur le sol deux bandes transversalement par rapport à la direction des bandes 3, 3', alimentées en courant, la liaison des bandes 3 avec l'une de ces deux bandes et des bandes 3' avec l'autre de ces deux bandes s'effectuant, par exemple, par agrafage métallique.

En variante, à titre d'exemple, on peut ne pas prévoir de couche inférieure 6 de sorte que les bandes 3 présentent une face inférieure apparente qui peut venir s'appliquer contre des conducteurs convenablement disposés et reliés aux deux pôles de la source de courant. En variante également, le revêtement 6 peut être prévu pour pouvoir être facilement enlevé sur une longueur quelconque pour faciliter le raccordement.

Le récepteur électrique peut être, par exemple, une lampe d'un appareil d'éclairage, schématiquement représenté par la référence 7 et porté par un socle plat circulaire 8, pourvu de trois pointes métalliques 9 disposées aux trois sommets d'un triangle équilatéral dont la hauteur est sensiblement égale à la distance entre les centres de deux bandes adjacentes, c'est-à-dire l'entraxe des deux bandes. Les trois aiguilles 9 sont connectées respectivement aux trois entrées d'un circuit de commutation, tel que décrit, par exemple, dans l'une des demandes de brevet précitées, et réalisé d'une façon en soi connue de sorte que le recepteur 7 se trouve alimenté dès lors qu'au moins deux aiguilles 9 sont amenées en contact avec deux bandes 3, 3' de polarités opposées.

On a représenté sur la figure 2, de façon schématique, une aiguille 9 traversant la moquette de façon que sa pointe vienne transpercer la bande 3' et assurer la liaison électrique.

Dans la forme de réalisation décrite, ainsi que dans le reste de l'invention, les bandes conductrices sont alimentées à partir d'une source électrique, de préférence une source alternative à basse tension mais pouvant également être une source à la tension du réseau, par exemple le réseau 220 volts.

On comprend qu'il est peu probable, pour une position aléatoire quelconque du support 8 sur la paroi revêtue conformément à l'invention, de ne pas obtenir l'alimentation et, si cela était le cas, l'utilisateur n'aurait qu'à déplacer légèrement le support et enfoncer les aiguilles 9 pour obtenir, à coup sûr, une alimentation.

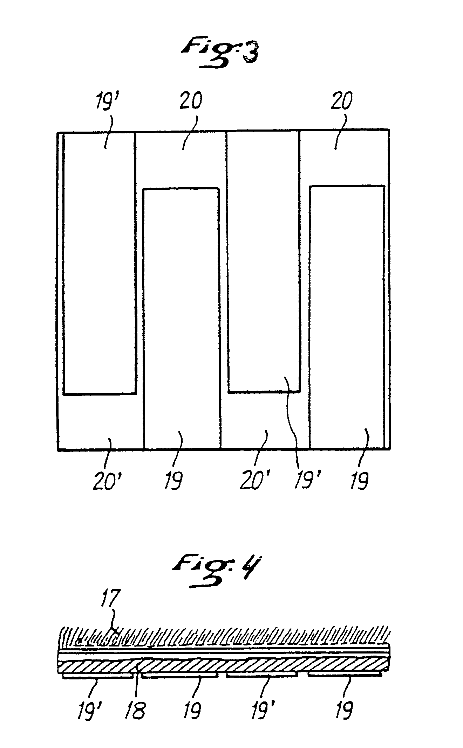

Sur les figures 3 à 5 une dalle de moquette, présentant, par exemple, une couche d'usure 17 aiguilletée et collée contre une couche d'assise bituminée 18 dont la face inférieure présente quatre bandes 19, 19' de polarités opposées alternées. Comme on le voit, les bandes s'arrêtent, alternativement, à une certaine distance de l'extrémité correspondante, c'est-à-dire du bord, de la dalle de façon à laisser des intervalles libres 20, 20'. En outre, il n'existe pas, dans cette dalle, un revêtement inférieur, tel que le revêtement 6, la surface inférieure métallique des bandes 19, 19' étant apparente.

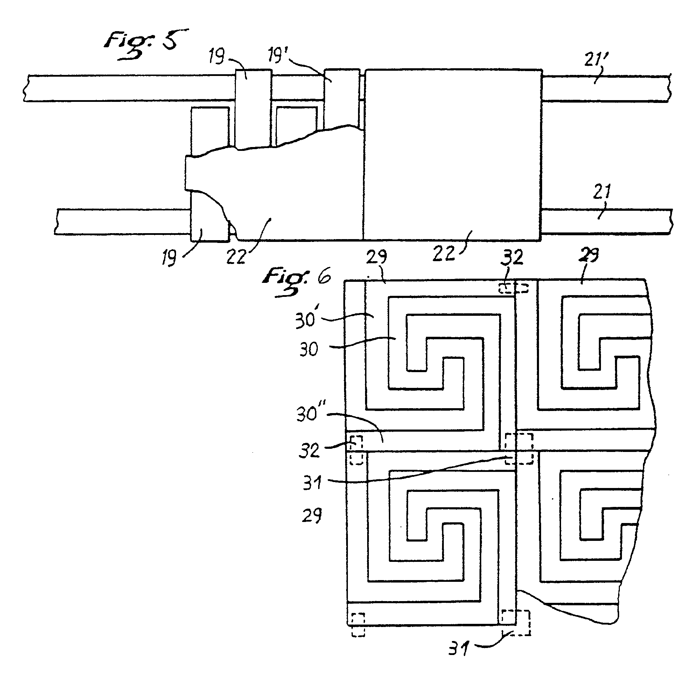

Ces dalles peuvent être disposées en rangées, au-dessus de deux conducteurs, par exemple, réalisés sous forme de bandes métalliques continues 21, 21' posées, collées ou autrement fixées sur le sol. Sur la fig. 5 on a représenté deux dalles 22 analogues à celle de la figure 3 et juxtaposées. On voit que le conducteur 21 ayant l'une des polarités peut être recouvert par les extrémités des conducteurs 19 destinés à la même polarité alors que les bandes 19' de l'autre polarité, en raison des espaces 20' ne peuvent pas venir au contact du conducteur 21 et réciproquement.

On se réfère maintenant à la figure 6.

Dans cette forme de réalisation, on a représenté quatre dalles carrées 29, vues par leur faces inférieures. Ces dalles comportent, comme les précédentes, une couche d'usure et une couche isolante (non représentée). Chaque dalle présente, sous la couche isolantes, et collés contre celle-ci, trois conducteurs aplatis en forme de bandes, disposés en volutes concentriques à savoir, le conducteur 30 qui s'étend du bord de gauche (sur le dessin) jusqu'au bord de droite de la dalle, et deux conducteurs de polarités identiques et opposées à celles du conducteur 30, à savoir les conducteurs 30' et 30" séparés entre eux par le conducteur 30. On n'a pas représenté sur les dessins, pour des buts de simplification, les petits intervalles libres existant entre les conducteurs respectifs 30', 30, et 30". On voit qu'avec ces dispositions, deux conducteurs adjacents sont toujours de polarités opposées, et que le conducteur 30 et l'une des dalles aura une polarité opposée à celle des conducteurs 30 des dalles adjacentes disposées sur ses côtés et une polarité identique à celle du conducteur 30 des dalles qui lui sont opposées par un sommet commun. Les liaisons entre les dalles et des conducteurs d'alimentation non représentés s'effectuent aux sommets communs au moyen d'un élément de liaison 31 qui peut être, par exemple, une lame conductrice carrée ou un ensemble d'agrafes. En ce qui concerne les dalles qui sont disposées à la périphérie du revêtement, des moyens de raccordement de conducteurs 32 permettent de relier un conducteur 30', ou 30", à un conducteur 30 de la dalle adjacente.

Comme cela à été vu, on comprend que l'on peut utiliser certaines des bandes conductrices à des usages spécifiques différents de l'alimentation en courant électrique, par exemple, pour la circulation de signaux téléphoniques, informatiques, en provenance de capteurs ou de signaux de commande, etc...

Enfin, on comprend qu'on peut rendre solidaires à demeure, des éléments de revêtement selon l'invention, et notamment des dalles, des appareils ou dispositifs quelconques qui apparaîtront en relief ou pourront même être incrustés dans les dalles si leur épaisseur réduite le permet. Ces appareils peuvent être, par exemple, des prises, des interrupteurs, des capteurs etc...

## Revendications

1. Revêtement de paroi permettant l'alimentation d'un récepteur électrique (8) à positions variables sur la paroi, notamment à l'aide d'un capteur de courant à positions variables portant au moins deux palpeurs (9) susceptibles de venir en contact avec des bandes conductrices, lesdits palpeurs étant réalisés sous la forme d'aiguilles (9) de contact métalliques de même longueur traversant une couche en matière isolante (2;18) formant un revêtement en forme de dalle appliqué sur les bandes conductrices (3,3'; 19,19'), et comportant une couche d'usure supérieure (1,17), notamment textile, formant la face apparente du revêtement, et comportant deux ensembles de bandes conductrices parallèles (3,3';19,19') fixés sous ladite couche de matière isolante (2;18) et qui s'étendent selon la direction longitudinales ou latérale de la dalle, chaque bande conductrice (3,3';19,19') d'un ensemble de bandes étant susceptible d'être connecté à l'un des deux pôles respectivement d'une source de courant caractérisé en ce que ledit revêtement de paroi se présente sous la forme d'éléments prêts à poser, et comporte des moyens pour assurer la continuité électrique entre deux éléments adjacents.

2. Revêtement de paroi selon la revendication 1, caractérisé en ce que la couche de matière isolante est une couche de mousse ou de thibaude (2).

3. Revêtement de paroi selon la revendication 2, caractérisé en ce que la couche d'usure (1,17) est une couche de moquette.

4. Revêtement de paroi selon l'une quelconque des revendications précédentes caractérisé en ce que les bandes conductrices (3,3'; 19,19') sont recouvertes, sous la dalle, d'un film ou feuille de recouvrement (6) isolant.

5. Revêtement de paroi selon l'une quelconque des revendications précédentes caractérisé en ce que les moyens pour assurer la continuité électrique entre les bandes conductrices d'un élément prêt à poser et les bandes de polarité identiques des éléments adjacents comprennent des agrafes ou des plaques conductrices.

6. Revêtement de paroi selon l'une quelconque des revendications précédentes caractérisé en ce qu'il comporte des bandes conductrices ayant une fonction spécialisée, notamment de lignes téléphoniques ou informatiques ou de signal d'alarme et/ou en ce qu'il comporte, à demeure, des appareils électriques.

## Patentansprüche

1. Wandverkleidung, welche die Speisung eines elektrischen Verbrauchers (8) an veränderlichen Stellen der Wand ermöglicht, insbesondere mit Hilfe eines Stromabnehmers, der mindestens zwei Abgreifvorrichtungen (9) trägt, die mit Leiterstreifen in Verbindung gebracht werden können und in Form von metallischen Kontaktnadeln (9) gleicher Länge ausgebildet sind, die eine Schicht (2; 18) aus Isoliermaterial durchdringen, die eine auf den Leiterstreifen (3, 3'; 19, 19') angeordnete Verkleidung in Form einer Platte bildet, und mit einer äußeren, insbesonderen textilen äußeren Gebrauchsschicht (1, 17), die die Sichtseite der Verkleidung bildet, und mit zwei Systemen paralleler Leiterstreifen (3, 3'; 19, 19') die auf der Schicht (2; 18) aus Isoliermaterial angeordnet sind, sich in Längs- oder Querrichtung der Platte erstrecken und jeweils an einen entsprechenden von zwei Polen einer Stromquelle anschließbar sind, **dadurch gekennzeichnet**, daß die Wandverkleidung die Form von Fertigteilelementen hat und Einrichtungen zur Gewährleistung einer durchgehenden elektrischen Verbindung zwischen zwei benachbarten Elementen enthält.

2. Wandverkleidung nach Anspruch 1, **dadurch gekennzeichnet**, daß die Schicht aus Isoliermaterial eine Schicht (2) aus Schaumstoff oder Teppichunterlagematerial ist.

3. Wandverkleidung nach Anspruch 2, **dadurch gekennzeichnet,** daß die Gebrauchsschicht eine Schicht aus Moquette ist.

4. Wandverkleidung nach einem der vorhergehenden Ansprüche, **dadurch gekennzeichnet,** daß die Leiterstreifen (3, 3'; 19, 19') unter der Platte mit einer isolierenden Abdeckschicht oder -folie abgedeckt sind.

5. Wandverkleidung nach einem der vorhergehenden Ansprüche, **dadurch gekennzeichnet,** daß die Einrichtungen zur Gewährleistung einer durchgehenden elektrischen Verbindung zwischen den Leiterstreifen eines Fertigteilelements und den Leiterstreifen gleicher Polarität der benachbarten Elemente Klemmen oder leitende Plättchen enthalten.

6. Wandverkleidung nach einem der vorhergehenden Ansprüche, **dadurch gekennzeichnet,** daß sie Leiterstreifen, die eine spezielle Funktion haben, insbesondere Fernsprech- oder Information- oder Alarmsignalleitungen und/oder fest installierte elektrische Einrichtungen enthält.

## Claims

1. Wall covering allowing supply of an electric receiver 8 at variable positions on the wall; particularly with the aid of a variable-position current sensor bearing at least two feelers 9 able to contact conducting strips, said feelers being in the form of metal contact needles 9 of the same length passing through a layer of insulating material 2, 18, forming a covering in the form of a tile applied on the conducting strips 3, 3'; 19,19' and comprising an upper, particularly textile, wearing layer 1, 17, forming the visible face of the covering, and comprising two assemblies of parallel conducting strips 3, 3'; 19, 19' fixed under said layer of insulating material 2, 18, and which extend in the longitudinal or lateral direction of the tile, each conducting strip 3, 3'; 19, 19' of an assembly of strips being capable of being connected to one of the two poles respectively of a source of current, characterized in that said wall covering is in the form of ready-to-lay elements, and comprises means for ensuring electric continuity between two adjacent elements.

2. Wall covering according to Claim 1, characterized in that the layer of insulating material is a layer of foam or underlay 2.

3. Wall covering according to Claim 2, characterized in that the wearing layer 1, 17 is a layer of carpet.

4. Wall covering according to any one of the preceding Claims, characterized in that the conducting strips 3, 3'; 19, 19' are covered, under the tile, with an insulating covering film or sheet 6.

5. Wall covering according to any one of the preceding Claims, characterized in that the means for ensuring electric continuity between the conducting strips of one ready-to-lay element and the strips of identical polarity of the adjacent elements, include conducting staples or plates.

6. Wall covering according to any one of the preceding Claims, characterized in that it comprises conducting strips having a specialized function, particularly of telephone or data-processing or alarm signal lines and/or in that it comprises permanently fixed electric appliances.

*Fig. 1*

*Fig. 2*

*Fig. 3*

*Fig. 4*

Fig. 5

Fig. 6